Europäisches Patentamt

**European Patent Office**

Office européen des brevets

(19)

(11) Numéro de publication : **0 049 788**
**B1**

(12)   **FASCICULE DE BREVET EUROPÉEN**

(45) Date de publication du fascicule du brevet :
07.11.84

(51) Int. Cl.³ : **F 16 H 25/22**

(21) Numéro de dépôt : 81107563.9

(22) Date de dépôt : 23.09.81

(54) **Dispositif de roulement à rouleaux fonctionnant comme vis et écrou.**

(30) Priorité : 09.10.80 CH 7535/80

(43) Date de publication de la demande :
21.04.82 Bulletin 82/16

(45) Mention de la délivrance du brevet :
07.11.84 Bulletin 84/45

(84) Etats contractants désignés :
AT BE DE FR GB IT LU NL SE

(56) Documents cités :
CH-A- 290 685
DE-A- 2 540 348
FR-A- 2 093 070
FR-A- 2 179 289
US-A- 3 101 623

(73) Titulaire : **ROLLVIS S.A.**
**8, Chemin du Centurion**
**CH-1227 Carouge Genève (CH)**

(72) Inventeur : **Fuchsluger, Gérard**
**A l'Essert**
**CH-1164 Buchillon Vaud (CH)**

(74) Mandataire : **Micheli, Michel Pierre et al**
**MICHELI & CIE 118, Rue du Rhône Case Postale 47**
**CH-1211 Genève 6 (CH)**

# 0 049 788

**Description**

On connaît déjà du brevet suisse n° 290 685 un dispositif de roulement à rouleaux utilisable comme vis et écrou qui comporte une partie femelle et une pièce mâle coaxiales entre lesquelles sont disposés plusieurs rouleaux filetés. Les filets de ces rouleaux sont en prise avec des filets ménagés sur la face interne de la pièce externe femelle et sur la face externe de la pièce interne mâle. Les filets de ces pièces et de ces rouleaux forment des angles constants par rapport à une direction parallèle à l'axe longitudinal du dispositif. A noter que les filets des rouleaux forment le même angle par rapport à ladite direction que les filets de l'une des deux pièces entre lesquelles ils sont montés et que pour éviter un glissement dans le sens circonférentiel des rouleaux par rapport à cette pièce, cette dernière est munie à chacune de ses extrémités d'une couronne dentée qui engrène avec des pignons solidaires en rotation des extrémités correspondantes des rouleaux. Ce dispositif comporte en outre un système de rattrapage de jeu formé d'une douille entourant la partie femelle et prenant appui sur l'une de ses extrémités. Une bague filetée vissée dans l'autre extrémité de cette douille permet de rapprocher les deux écrous et de mettre sous tension les filets des rouleaux contre ceux des écrous.

Ce système de rattrapage de jeu est encombrant et lourd. De plus la denture des pignons solidaires des rouleaux se trouve sur le même diamètre que le filet de ces rouleaux. Cette denture est affaiblie par le filet qui coupe ou tronque une partie des dents. Ces pignons tronqués provoquent une usure rapide de la couronne dentée avec laquelle ils sont en prise, ce qui limite également la durée de vie de ces dispositifs.

La présente invention a pour but de remédier aux inconvénients précités et a pour objet un dispositif de roulement comprenant les caractéristiques de la revendication 1.

Les dessins annexés illustrent schématiquement l'état de la technique et à titre d'exemple une forme d'exécution du dispositif de roulement selon l'invention.

La figure 1   est une coupe axiale d'une réalisation de l'état de la technique.
La figure 2   est une vue en bout partielle de la figure 1.
La figure 3   est une coupe axiale partielle d'une forme d'exécution du dispositif selon l'invention.
La figure 4   illustre un rouleau d'un dispositif de roulement connu.
La figure 5   illustre un rouleau du dispositif de roulement objet de l'invention.

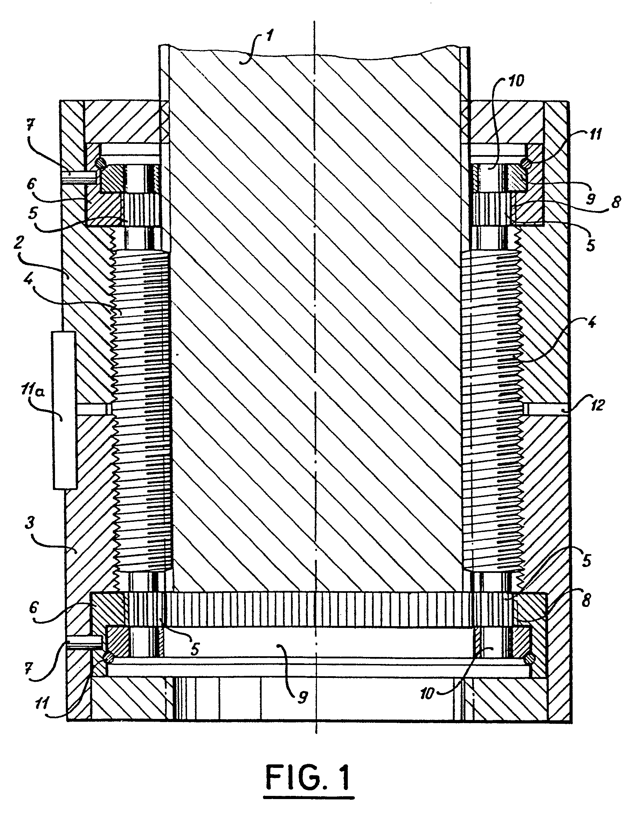

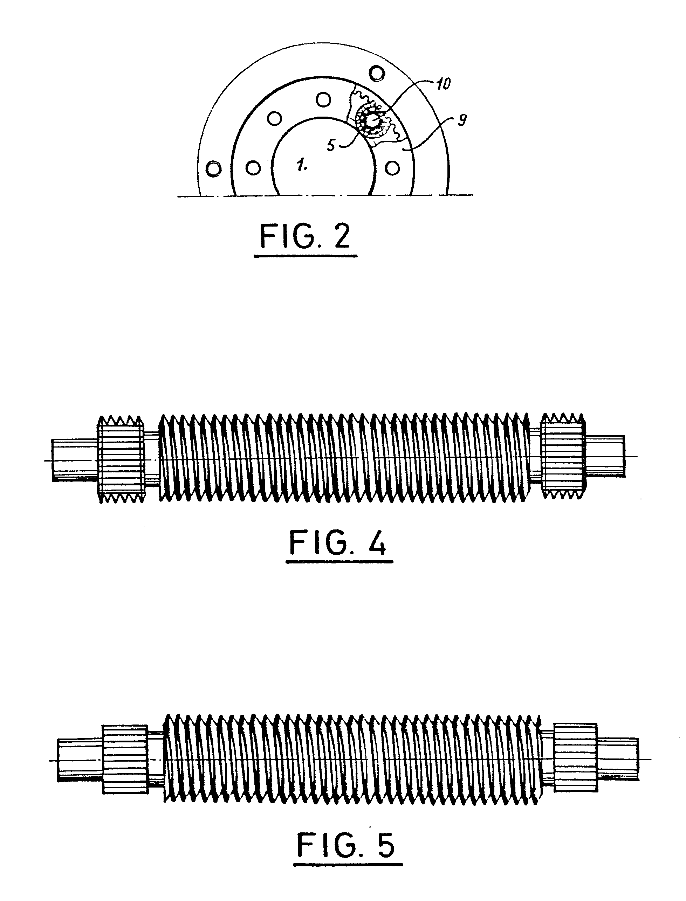

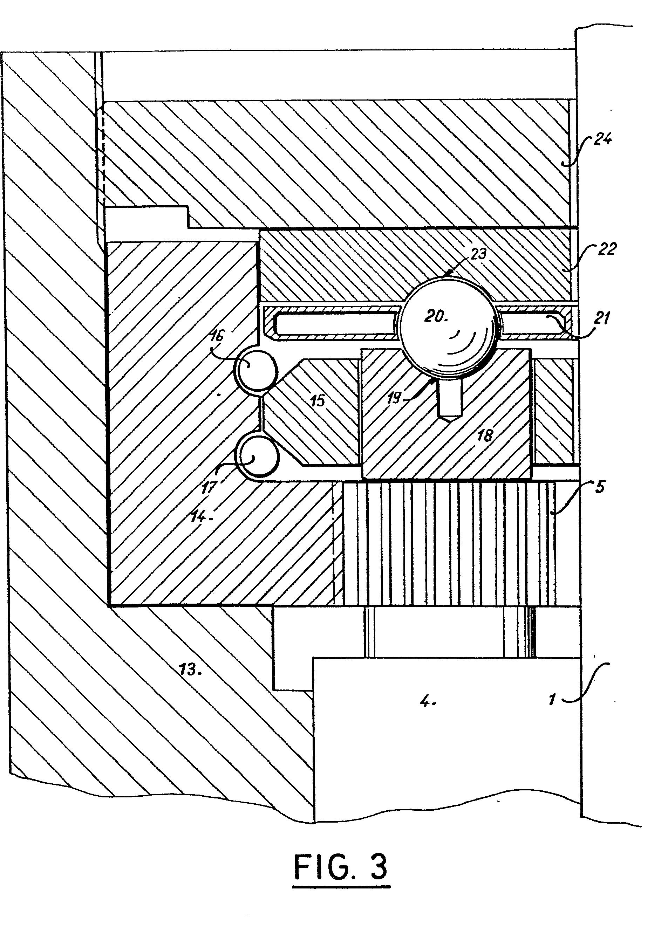

Dans la réalisation illustrée aux figures 1 et 2, le dispositif de roulement comporte une pièce interne mâle ou vis 1 filetée extérieurement et deux pièces femelles ou écrous 2, 3 filetées intérieurement.

Les rouleaux filetés 4 sont disposés entre ces deux pièces mâle et femelle dont les filets sont en prise avec les filets de ces pièces.

Les filets des pièces mâle 1, femelles 2, 3 et des rouleaux 4 forment un angle constant par rapport à une direction parallèle à l'axe longitudinal du dispositif. De plus, dans l'exemple illustré, les angles que forment les filets des rouleaux 4 et de la pièce femelle 2, 3 par rapport à cette direction sont identiques.

Chaque extrémité de chaque rouleau est munie d'un pignon 5, solidaire dont le sommet de la denture se trouve sur un diamètre au plus égal au diamètre du fond du filet de ce rouleau 4.

Des bagues 6 rapportées sur les pièces 2, 3 femelles et fixées à celles-ci par des goupilles 7 portent une denture interne 8 en prise avec la denture des pignons 5 des rouleaux 4.

Des bagues d'extrémités 9 comportent des perçages dans lesquels sont logées des extrémités cylindriques 10 des rouleaux 4 sont maintenues en place à l'aide de circlips 11.

Il est évident que la vis 1, les écrous 2, 3 et les rouleaux 4 peuvent comporter un ou plusieurs filets.

Les deux écrous 2, 3 sont reliés par une clavette 11a fixant leur position angulaire relative mais permettant un déplacement relatif axial entre ces deux écrous.

Une cale de prétension 12 est disposée entre les deux écrous 2, 3 et tend à les écarter l'un de l'autre. Grâce à cette prétension les jeux qui pourraient apparaître du fait de l'usure des filets sont automatiquement rattrapés. Lorsque l'usure est grande et que la prétension initiale n'est plus assez forte, on remplace la cale de prétension 12 par une autre cale légèrement plus épaisse rétablissant la prétension à sa valeur normale permettant à nouveau de rattraper automatiquement tous les jeux.

Un autre avantage du dispositif décrit, réside dans le fait que le diamètre des pignons 5 est plus faible ou au plus égal au diamètre du fond du filetage des rouleaux 4, comme cela est clairement illustré à la figure 5. On voit immédiatement que l'inconvénient des rouleaux des dispositifs connus, illustrés à la figure 4, est éliminé. Dans ces rouleaux connus (Fig. 4), les dents des pignons sont tronquées par le filetage du rouleau, ce qui les affaiblit et leur donne une forme correspondante qui provoque l'usure de la couronne.

Par contre, dans le présent dispositif, on peut donner aux dentures des pignons 5 et de la couronne 6 des formes adéquates, par exemple en développante, de manière à obtenir des conditions de roulement favorables évitant l'usure.

Pour calculer un dispositif tel que celui décrit, on part des données suivantes :

— diamètre sur flancs de la vis « dv » ;
— pas de la vis « P » ;
— nombre de filets de la vis « nf » ;

2

et l'on veut calculer :

- diamètre sur flancs du rouleau « dR » ;
- pas du rouleau « PR » ;
- diamètre extérieur du filet du rouleau « deR » ;
- diamètre intérieur du filet du rouleau « diR » ;
- diamètre primitif de la denture du rouleau « $d_1R$ » ;
- nombre de dents du rouleau « ZR » ;
- module du rouleau et de la couronne « $m_0$ » (à choisir) ;
- diamètre sur flancs de l'écrou « de » ;
- pas de l'écrou « p » (le même que celui de la vis) ;
- diamètre primitif de la couronne « dc » ;
- nombre de dents de la couronne « Zc » ;
- « $\varphi f$ » angle de pression de fonctionnement.

A titre d'exemple, si l'on prend :

$$dv = 30 \ mm \ ; \ P = 3 \ mm \ ; \ nf = 5$$

on obtient :

$$dR = dv/(nf - 2) = 30/(5 - 2) = 10$$

$$pR = p/nf = 3/5 = 0,6$$

- module choisi 0,5 ;
- $diR = dR - 2 \ H_1 = 10 - 0,2 = 9,8,$

où $H_1$ : profondeur du filetage du rouleau.
On choisira comme diamètre extérieur de la denture du rouleau ($de_1R$) : 10
$d_1R = de_1R - 2 \cdot m = 10 - 2,05 = 9 \ mm.$
$ZR = (d_1R)/m = 9/0,5 = 18 \ dents$
$de = dv/(nf - 2) \cdot (nf) = (30/3) \cdot 5 = 50 \ mm.$
$dc = dv + dR + d_1R = 30 + 10 + 9 = 49$
$Zc = ZR \cdot (nf) = 18 \cdot 5 = 90$
$m_1 = 49/90 = 0,544$ (module effectif de la couronne)
$m_0 \cdot \cos \varphi = m_1 \cdot \cos \varphi_f \geq \varphi_f = (m_0 \cdot \cos \varphi_0)/m_1 = 0,863$
$\varphi_f = 30°.$

L'angle de pression de fonctionnement $\varphi_f$ est assez élevé, mais il n'altère pas le fonctionnement de la vis. Il aurait été possible de faire le rouleau avec 19 dents, cela aurait eu pour effet de diminuer $\varphi_f$, mais la denture aurait été « entaillée » par le filet. Cependant, tout le profil de la denture aurait pu être utilisé.

Le dispositif de roulement à rouleau selon l'état de la technique fonctionne comme vis et écrou et présente des avantages, comme très faible friction, donc couple très faible, peu d'inertie, etc., et en plus, ce dispositif permet un rattrapage du jeu et en diminuant l'usure au niveau des pignons 5 et des couronnes 6, ce qui augmente grandement la longévité des dispositifs.

Dans la forme d'exécution du dispositif selon l'invention illustrée à la figure 3 partiellement et à plus grande échelle, le dispositif de roulement comporte également une vis 1 filetée sur sa surface externe et un écrou 13 en une seule pièce filetée intérieurement. Des rouleaux 4, similaires à ceux de la forme d'exécution de l'état de la technique sont intercalés entre la vis 1 et l'écrou 13 et les filets de ces rouleaux 4 sont en prise à la fois avec ceux de la vis et ceux de l'écrou.

L'une des extrémités du dispositif de roulement, celle qui n'est pas illustrée, est réalisée par exemple de la même façon que l'une des extrémités de la première forme d'exécution de ce dispositif.

L'autre extrémité comporte une couronne dentée 14 rapportée et fixée dans l'écrou 13, dont la denture interne est en prise avec les pignons 5 des rouleaux 4.

Une bague d'extrémité 15 est pivotée sur la couronne dentée 14 entre deux joues 16, 17. Cette bague comporte des perçages donnant passage aux tourillons 18 d'extrémité des rouleaux 4.

La face terminale de chaque tourillon 18 présente une couronne sphérique 19 recevant une bille 20. Une cage libre 21 maintient ces billes 20 en position alors qu'un anneau 22 comportant un chemin de roulement 23 est placé par-dessus les billes 20. Un couvercle 24 vissé dans l'extrémité de l'écrou 13 permet de mettre sous tension l'ensemble écrou-rouleaux en vue d'éliminer tous jeux. Grâce à ce dispositif de rattrapage du jeu, une simple rotation du couvercle 24 par rapport à l'écrou 13 permet d'ajuster la prétension du dispositif en fonction de son usure.

Dans la forme d'exécution décrite, le dispositif de rattrapage du jeu permet d'appliquer une tension ou prétension entre les rouleaux et l'écrou de sorte que les filets en prise de ces éléments soient toujours appliqués les uns contre les autres avec une force déterminée permettant de rattraper automatiquement tous jeux dus à l'usure desdits filets.

## Revendications

1. Dispositif de roulement à rouleaux, fonctionnant comme vis et écrou, comportant une partie femelle (13) et une partie mâle (1) coaxiales entre lesquelles sont disposés plusieurs rouleaux (4) filetés dont les filets sont en prise avec des filets ménagés sur la face interne de la partie femelle (13) et sur la face externe de la partie mâle (1), et dans lequel les filets de ces pièces forment des angles constants par rapport à une direction parallèle à l'axe longitudinal du dispositif de roulement, les filets des rouleaux formant par rapport à ladite direction le même angle que les filets de l'une des parties mâle (1) ou femelle (13) ; cette dernière partie comportant à ses extrémités des couronnes dentées (14) engrènant avec des pignons (5) solidaires des extrémités de chaque rouleau (4), et comportant encore un dispositif de rattrapage de jeu provoquant la mise sous tension des filets des rouleaux contre les filets de la partie comportant les couronnes dentées, caractérisé par le fait que l'une des extrémités de chaque rouleau (4) présente une creusure (19) recevant une bille (20), un anneau (22) comportant un chemin de roulement (23) étant placé sur ces billes (20) et soumis à l'action d'un couvercle (24) vissé sur la partie (13) comprenant la couronne dentée en prise avec les pignons desdites extrémités de chaque rouleau.

2. Dispositif selon la revendication 1, caractérisé par le fait qu'une cage d'espacement (21) est située entre l'extrémité des rouleaux (4) et l'anneau (22) pour maintenir les billes (20) dans leur position espacée.

3. Dispositif selon la revendication 1, caractérisé par le fait que le diamètre du sommet des dents des pignons (5) des rouleaux (4) est au plus égal au diamètre du fond du filet de ces rouleaux.

## Claims

1. Roller-bearing device operating as screw and nut, comprising a female part (13) and a male part (1) which are coaxial and between which several threaded rollers (4) are located, the threads of which mesh with threads provided on the internal face of the female part (13) and on the outside face of the male part (1), and in which the threads of these pieces make constant angles with respect to a direction parallel to the longitudinal axis of the roller-bearing, the threads of the rollers forming with respect to the said direction the same angle than the threads of one of the male (1) or female (13) parts ; this latter part comprising at its ends toothed crowns (14) meshing with pinions (5) fast with the ends of each roller (4), and comprising further a play cancelling device causing the tentionning of the threads of the rollers against the threads of the part comprising the toothed crowns, characterized by the fact that one of the ends of each roller (4) has a recess (19) receiving a ball (20), a ring (22) comprising a rolling path (23) being placed on the balls (20) and submitted to the action of a cover (24) screwed on the part (13) comprising the toothed crown meshing with the pinions of the said ends of each roller.

2. Roller-bearing as claimed in claim 1, characterized by the fact that a spacing cage (21) is located between the end of the rollers (4) and the ring (22) to maintain the balls (20) in their spaced position.

3. Roller-bearing as claimed in claim 1, characterized by the fact that the diameter of the summit of the teeth of the pinions (5) of the rollers (4) is at the most equal to the diameter of the bottom of the threads of these rollers.

## Ansprüche

1. Nach Art von Schraube und Mutter funktionierende Rollenlagervorrichtung, mit einem weiblichen Teil (13) und einem zu diesem koaxialen männlichen Teil (1), zwischen denen mehrere Gewinderollen (4) angeordnet sind, deren Gewinde mit auf der Innenseite des weiblichen Teiles (13) und auf der Außenseite des männlichen Teiles (1) ausgebildeten Gewinden in Eingriff stehen, wobei die Gewinde dieser Teile konstante Winkel mit einer zur Längsachse der Lagervorrichtung parallelen Richtung einschließen und wobei die Gewinde der Rollen mit dieser Richtung den gleichen Winkel wie die Gewinde des männlichen Teiles (1) oder des weiblichen Teiles (13) einschließen ; dieser letztere Teil weist an seinen Enden Zahnkränze (14) auf, die mit Ritzeln (5) in Eingriff stehen, welche mit den Enden jeder Rolle (4) fest verbunden sind, und weist ferner eine Vorrichtung zum Nachstellen des Spiels auf, welche eine Vorspannung der Rollengewinde gegen die Gewinde des die Zahnkränze tragenden Teiles bewirkt, dadurch gekennzeichnet, daß eines der Enden jeder Rolle (4) eine Ausnehmung (19) zur Aufnahme einer Kugel (20) aufweist, wobei ein Ring (22), der eine Rollbahn (23) trägt, auf den Kugeln (20) angeordnet ist und unter der Wirkung eines Deckels (24) steht, der auf jenen Teil (13) aufgeschraubt ist, welcher den Zahnkranz trägt, der mit den Ritzeln an den Enden jeder Rolle im Eingriff steht.

2. Vorrichtung nach Anspruch 1, dadurch gekennzeichnet, daß zwischen dem Ende der Rollen (4) und dem Ring (22) ein Abstandhalterkäfig (21) vorgesehen ist, um die Kugeln (20) mit gegenseitigem Abstand in ihrer Lage zu halten.

3. Vorrichtung nach Anspruch 1, dadurch gekennzeichnet, daß der Durchmesser des Scheitels der Zähne der Ritzel (5) der Rollen (4) höchstens gleich dem Durchmesser des Bodens des Gewindes dieser Rollen ist.

4

**FIG. 1**

FIG. 2

FIG. 4

FIG. 5

0 049 788

FIG. 3

3